(19) Europäisches Patentamt
European Patent Office
Office européen des brevets

(11) EP 4 663 604 A1

(12) **EUROPEAN PATENT APPLICATION**
published in accordance with Art. 153(4) EPC

(43) Date of publication:
**17.12.2025 Bulletin 2025/51**

(21) Application number: **24753441.5**

(22) Date of filing: **09.02.2024**

(51) International Patent Classification (IPC):
***C01F 7/78** (2022.01)* ***C08F 4/654** (2006.01)*

(52) Cooperative Patent Classification (CPC):
**C01F 7/78; C08F 4/654**

(86) International application number:
**PCT/JP2024/004489**

(87) International publication number:
**WO 2024/166998 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.02.2023 JP 2023018725**
**09.02.2023 JP 2023018726**

(71) Applicant: **Mitsui Chemicals, Inc.**
**Tokyo 104-0028 (JP)**

(72) Inventors:
- **OSAKABE Yuta**
**Kuga-gun, Yamaguchi 740-0061 (JP)**
- **KAI Noriko**
**Kuga-gun, Yamaguchi 740-0061 (JP)**
- **KAI Yasuhiro**
**Kuga-gun, Yamaguchi 740-0061 (JP)**
- **TAMURA Ayano**
**Sodegaura-shi, Chiba 299-0265 (JP)**

(74) Representative: **J A Kemp LLP**
**80 Turnmill Street**
**London EC1M 5QU (GB)**

# (54) METHOD FOR PRODUCING MAGNESIUM COMPOUND PARTICLES, METHOD FOR CONTROLLING OLEFIN POLYMER PARTICLE SHAPE, OLEFIN POLYMER PARTICLES

(57) [Problem] An object of the present invention is to provide a method for producing a particle useful for the production of an olefin-based polymer microparticle having an uneven shape on the surface thereof, the particle including a magnesium atom and a specific metal atom and having a small average particle size.

[Solution] A magnesium-containing compound liquid and an organometallic compound containing a specific metal atom are brought into contact with each other under specific conditions to produce a particle having a specific average particle size that contains a magnesium atom and the specific metal atom at a specific ratio. With the above particle size and atom ratio, the particle obtained is useful to produce an olefin-based polymer microparticle having an uneven shape on the surface thereof.

EP 4 663 604 A1

## Description

### Technical Field

The present invention relates to a method for producing a magnesium compound particle, a method for controlling the shape of an olefin polymer particle, and an olefin polymer particle.

### Background Art

In recent years, polymer microparticles have been actively developed and widely used for various industrial applications. In particular, polymer microparticles having a spherical particle shape with narrow particle size distribution are used in applications such as filters, separation membranes, dispersants, powder coating, resin modifiers, and coating agents, owing to their excellence in processability, fluidity, and surface properties. These polymer particles are known to be made of materials such as acrylic resin, styrene resin, and melamine resin, which are mainly produced by emulsion polymerization. Meanwhile, polyolefin microparticles are also known. Since the polyolefin microparticles are hydrocarbon-based materials that have high crystallinity and a high melting point and basically contain no heteroatom, various new materials and new applications have been devised and put into practical use by taking advantage of their features such as high chemical stability, specifically, water resistance, oil resistance, chemical resistance, and biological safety.

For example, polyethylene-based microparticles, non-treated or with treatment such as surface modification, can be used, for example, as fillers of columns for separating chemical or biological substances with high efficiency, adsorbents or catalyst carriers with high specific surface area. Moreover, the microparticles are utilized as carriers with function of delivery and sustained release of drugs, spraying agents for homogeneously dispersing particulate substances with low dispersibility, or highly safe particulate materials that provide good touch effect to the skin when used as cosmetic materials.

In addition, the polyethylene-based microparticles are actively investigated for applications to novel functional materials such as a member for a separator in a lithium battery or a lithium ion secondary battery, a member for an optical filter with functions of light diffusion, reflection, or anti-reflection, a high-performance binder for a sintered porous material such as ceramic, a pore-forming material such as an air-permeable film, a carrier for immobilizing an immunochemically active substance, a microporous sintered filter with high specific surface area, a slipperiness imparting agent, a toner, a delusterant for paint, a light diffusive additive, an insulating filler, a nucleating agent for crystallization, a filler for chromatography, and a carrier for an immunodiagnostic agent.

Commonly to such uses as novel functional materials, for further functionalization and improvement in performances and quality, there is a demand for polyethylene-based spherical ultra-fine particles with smaller particle size and narrower particle size distribution free from inter-particle aggregation.

On the other hand, polyolefin microparticles are difficult to polymerize using water, such as emulsion polymerization, and it is generally difficult to control the shape of the resulting polymer. Currently known methods for producing polyethylene-based microparticles are roughly classified into the following four techniques, i.e., (1) mechanical grinding (pulverization at room temperature or in frozen state, wet grinding, and jet grinding), (2) spraying (spray drying and spray solidification), (3) forced emulsification (melt emulsification and solution emulsification), and (4) suspension polymerization.

The mechanical grinding is a method of pulverizing a bulk polymer by applying pulverization energy, such as impulse force and shear force, directly to the polymer. The shape of particles obtained by this method generally tends to be indeterminate, and therefore polyethylene-based microparticles with narrow particle size distribution are hardly obtained.

Next, the spraying is a method of spraying a liquefied substance, such as a polymer solution obtained by dissolving bulk polyethylene in a solvent or a molten polymer, from a nozzle and then solidified by drying and cooling to provide polymer microparticles. Although formed as microparticles having highly sphericity due to surface tension of the liquefied substance sprayed, the polyethylene-based microparticles obtained by this method are often obtained in an aggregate of some particles and generally have widely distributed particle size. Depending on the molecular weight of polyethylene-based resin, the viscosity of the polymer solution may increase, and the polymer solution may not be sprayed in the form of microparticles because of stringiness or other adverse events on spraying. Therefore, application of the spraying to a (ultra) high molecular weight polyethylene-based resin tends to be difficult.

In contrast, the emulsification is a method of forcedly emulsifying a polyethylene-based resin at a temperature equal to or higher than its melting point in aqueous medium in the presence of an emulsifier or a dispersant. This method has an advantage that, because of applied shear force to a melted polymer in an aqueous medium, spherical polyethylene-based particles with fewer aggregated particles are easily obtained compared with the above two microparticle-forming methods. However, even with this method, as the molecular weight of the polyethylene-based resin increases, it becomes more difficult to maintain narrow particle size distribution. Moreover, there is a tendency that it is difficult to apply the method to ultra-high molecular weight polyethylene. This method is also accompanied by problems such as remaining of the used

emulsifier in the microparticles, and thus its application is limited in some case.

The present applicant has reported methods for producing a spherical polyethylene-based microparticle directly from an ethylene monomer by a polymerization reaction using a solid olefin polymerization catalyst formed into a fine particle with controlled shape (Patent Literatures 1 to 4).

In these methods, a polyethylene microparticle should be obtained by a so-called replica effect in which the particle shape and size distribution of the solid olefin polymerization catalyst component are directly reflected in the particle shape and size distribution of the resultant polyethylene-based microparticle.

## Citation List

### Patent Literature

[Patent Literature 1] JP4828432B
[Patent Literature 2] JP5221848B
[Patent Literature 3] JP2006-206768A
[Patent Literature 4] JP2006-206769A

## Disclosure of Invention

### Technical Problem

Patent Literatures 1 to 4 disclose in Examples that particles having an average particle size of 0.95 μm to 20 μm are obtained as magnesium compound particles serving as a carrier for producing a solid olefin polymerization catalyst.

According to studies conducted by the present inventors, it has been found that when an attempt is made to produce a smaller magnesium compound particles, preparing a solid olefin polymerization catalyst using the particle, and olefin polymerization results in formation of a spherical particle having a smooth surface in some cases or formation of an olefin polymer particle having a shape with so-called *konpeito,* which is basically spherical but has slight unevenness on the surface thereof, in some cases.

In general, spherical microparticles are said to have low particle flowability in some cases although this depends on the particle size distribution. For example, when transported through a pipe, particles may form an arch-shaped particle agglomerate, resulting in loss of particle flowability. On the other hand, particles having unevenness on the surface thereof may be advantageous in terms of particle flowability compared with spherical particles. In addition, depending on the application, there may be a case in which spherical particles are considered suitable and a case in which particles with surface unevenness are considered suitable.

In other words, in the emulsion polymerization method, spherical particles are considered to be formed according to the laws of physics. On the other hand, it has been found that it is sometimes difficult to stably produce a specific shape (such as the uneven surface shape described above) of an olefin polymer particle within a specific particle size range.

Therefore an object of the present invention is to provide a method for producing a magnesium compound particle useful for producing of the olefin polymer particle stably having a shape with unevenness on the surface thereof (hereinafter, sometimes referred to as a "particle α").

Another object is to provide a production method (method for controlling the shape of particles) for stably and separately making an olefin polymer particle having a smooth surface (hereinafter, sometimes referred to as a "particle β") and the particle α.

Furthermore, an object thereof is to provide an olefin polymer particle satisfying specific requirements (hereinafter, sometimes referred to as a "particle α1").

### Solution to Problem

As a result of studies conducted by the present inventors, it has been found that a magnesium compound particles useful for the production of an olefin-based polymer particle having a shape with unevenness on the surfaces thereof can be obtained by a method for producing a particle having a specific molar ratio of magnesium atoms to atoms of a metal element, excluding magnesium, selected from elements in Group 1, Group 2, and Group 13 in a specific range, the method including bringing a magnesium-containing compound and a compound containing atoms of the element selected from elements in Group 1, Group 2, and Group 13 into contact with each other in a specific temperature range. In addition, the present inventors have also found that it is possible to separately make the "particle α" and the "particle β" by controlling the molar ratio within a specific range. Furthermore, the present inventors have found a novel olefin polymer particle

(particle $\alpha 1$) satisfying a specific pore volume range specified by measurement with a mercury porosimeter, thereby completing the present invention. The present invention is specified by the following requirements.

[1] A method for producing a magnesium compound particle satisfying the following requirements (i) and (ii), the method comprising a contact step of bringing

(A) a magnesium-containing compound solution comprising

(A-1) a magnesium-containing compound and
(A-2) a compound comprising an element selected from elements in Group 15 and Group 16 of the periodic table, and

(B) an organometallic compound comprising a metal element (MB), excluding magnesium, selected from elements in Group 1, Group 2, and Group 13 of the periodic table into contact with each other in a temperature range of -20 to 10°C.

(i) A particle size is 0.05 to 0.90 $\mu$m.
(ii) A ratio ([Mg]/[MB]) of a molar content [Mg] of magnesium atoms to a molar content [MB] of atoms of the metal element (MB) is 1.0 or more and 11.5 or less.

[2] The production method according to [1], wherein a ratio ([MBr]/[Mgr]) of a molar amount [MBr] of atoms of the metal element (MB) used in the contact step to a molar amount [Mgr] of magnesium atoms contained in the magnesium-containing compound solution (A) is 2.5 to 2.96.
[3] The production method according to [1] or [2], wherein the time for bringing the magnesium-containing compound solution (A) and the organometallic compound (B) into contact with each other in the contact step is 0.6 to 10 hours.
[4] The production method according to ant one of [1] to [3], wherein the ratio [Mg]/[MB] is 5.0 to 11.3.
[5] The production method according to any one of [1] to [4], wherein the magnesium-containing compound solution (A) further comprises (A-3) a liquid hydrocarbon compound.
[6] A method for controlling the shape of an olefin polymer particle, the method comprising:

a contact step of bringing

(A) a magnesium-containing compound solution comprising

(A-1) a magnesium-containing compound and
(A-2) a compound comprising an element selected from elements in Group 15 and Group 16 of the periodic table, and

(B) an organometallic compound comprising a metal element (MB), excluding magnesium, selected from elements in Group 1, Group 2, and Group 13 of the periodic table into contact with each other in a temperature range of -20 to 10°C; and

a step of polymerizing an olefin in the presence of an olefin polymerization catalyst comprising a magnesium compound particle having a particle size of 0.05 to 0.90 $\mu$m produced through the contact step and a transition metal compound component to produce an olefin polymer particle,
the method comprising controlling a ratio ([Mg]/[MB]) of a molar content [Mg] of magnesium atoms to a molar content [MB] of atoms of the metal element (MB) in the magnesium compound particle within a range of 1.0 or more and 20 or less.

[7]
An olefin polymer particle having:

an average particle size of 3 to 25 $\mu$m,
an intrinsic viscosity [$\eta$] at 135°C in decalin of 5 to 50 dl/g, and
a pore volume in a pore size range of 0.1 to 1 $\mu$m, as determined with a mercury porosimeter, of 25 to 100 $mm^3$/g.

Advantageous Effects of Invention

According to the method for producing a magnesium compound particle of the present invention, it is possible to obtain a magnesium compound particle useful for production of an olefin-based polymer particle (particle $\alpha$) having an uneven shape on the surface thereof in a specific region where the particle size is small.
According to the controlling method of the present invention, it is possible to stably and separately make an olefin-based polymer particle (particle $\beta$) having a smooth surface and the particle $\alpha$.
It can be expected that such magnesium compound particles can be suitably used as a carrier of a catalyst for olefin polymer particles.
The olefin polymer particle ($\alpha$1) of the present invention is an olefin polymer microparticle satisfying a specific range of the particle size, the intrinsic viscosity, and the pore volume value measured with a mercury porosimeter. The olefin polymer particle ($\alpha$1) satisfying such requirements is also expected to be excellent in particle flowability.

Brief Description of Drawings

[Fig. 1] Fig. 1 is an electron micrograph of polymer particles used in Example 21.
[Fig. 2] Fig. 2 is an electron micrograph of polymer particles used in Example 22.
[Fig. 3] Fig. 3 is an electron micrograph of polymer particles used in Comparative Example 21.
[Fig. 4] Fig. 4 is an electron micrograph of polymer particles used in Comparative Example 22.

Description of Embodiments

The method for producing a magnesium compound particle of the present invention is defined as follows:
a method for producing a magnesium compound particle satisfying the following requirements (i) and (ii), the method including a contact step of bringing

(A) a magnesium-containing compound solution comprising

(A-1) a magnesium-containing compound and
(A-2) a compound including an element selected from elements in Group 15 and Group 16 of the periodic table, and

(B) an organometallic compound including a metal element (MB), excluding magnesium, selected from elements in Group 1, Group 2, and Group 13 of the periodic table

into contact with each other in a temperature range of -20 to 10°C.

(i) A particle size is 0.05 to 0.90 $\mu$m.
(ii) A molar content ratio ([Mg]/[MB]) of a molar content [Mg] of magnesium atoms to a molar content [MB] of atoms of the metal element (MB) is 1.0 or more and 11.5 or less.

Hereinafter, the above production method will be described in detail.

[Method for producing magnesium compound particle]

The magnesium compound particle produced by the production method of the present invention (hereinafter, also referred to as the "magnesium compound particle of the present invention") is a particle including magnesium and a metal element (MB), excluding magnesium, selected from elements in Group 1, Group 2, and Group 13 of the periodic table and has an average particle size of 0.05 to 0.90 $\mu$m. The lower limit of the average particle size is preferably 0.10 $\mu$m, more preferably 0.20 $\mu$m, and still more preferably 0.25 $\mu$m. On the other hand, the upper limit thereof is preferably 0.85 $\mu$m, more preferably 0.80 $\mu$m, and even more preferably 0.75 $\mu$m.
The particle preferably includes an alkoxy group having 1 to 20 carbon atoms and is preferably insoluble in a hydrocarbon solvent.
The magnesium-containing compound solution (A) (hereinafter also referred to as the "component (A)" or "magnesium compound liquid (A)") includes:

(A-1) a magnesium-containing compound, and
(A-2) a compound containing an element selected from elements in Group 15 and Group 16 of the periodic table.

As the magnesium-containing compound (A-1), a known magnesium compound such as a halogen-containing magnesium, an alkoxy group-containing magnesium, a magnesium salt of a carboxylic acid, and an organomagnesium compound typified by a Grignard reagent can be used. The magnesium compound can be used in combination, or can be used after reacting with a halogen, etc. in the middle. The magnesium compound is preferably a halogen-containing magnesium and more preferably a magnesium halide. As a specific magnesium halide, magnesium chloride and magnesium bromide are preferably used. As such a magnesium halide, a commercially available product may be used as it is, or the magnesium halide may be separately prepared from an alkyl magnesium. In the latter case, the magnesium halide may be used without isolation.
The compound (A-2) containing an element selected from elements in Group 15 and Group 16 of the periodic table is not particularly limited as long as it is a compound capable of forming a solution, such as an alcohol, a phenol, an ether, a carboxylic acid, an amine, or an organophosphorus compound, and the compound is preferably a compound having a hydroxy group.
More specifically, an alcohol having 1 to 20 carbon atoms or a phenol compound is preferable.
Particularly preferred is an alcohol having 1 to 20 carbon atoms.
Examples of the alcohol or phenol having 1 to 20 carbon atoms include alcohols and phenol compounds corresponding to the alkoxy group having 1 to 20 carbon atoms. Specific examples of the compounds include:

methanol, ethanol, n-propanol, i-propanol, n-butanol, i-butanol, t-butanol, n-pentanol, i-amyl alcohol, n-hexanol, n-heptanol, 2-ethyl-1-hexanol, n-octanol, dodecanol, octadecanol, 2-octyl-1-dodecanol, oleyl alcohol, benzyl alcohol, phenylethanol, cumyl alcohol, and i-propylbenzyl alcohol;
halogen-containing alcohols such as trichloromethanol, trichloroethanol, and trichlorohexanol;
lower alkyl group-containing phenols such as cresol, ethylphenol, nonylphenol, cumylphenol, and naphthol. Among these, methanol, ethanol, propanol, butanol, pentanol, i-amyl alcohol, hexanol, heptanol, 2-ethyl-1-hexanol, octanol, dodecanol, and 2-octyl-1-dodecanol are preferable.

An aspect of bringing the magnesium-containing compound (A-1) and the compound (A-2) containing an element selected from elements in Group 15 and Group 16 of the periodic table into contact with each other is preferably to perform the contact in the presence of a liquid hydrocarbon compound. Examples of such hydrocarbon compounds includes:

aliphatic hydrocarbons such as hexane, heptane, octane, decane, dodecane, and kerosene;
alicyclic hydrocarbons such as cyclopentane, cyclohexane, and methylcyclopentane;
aromatic hydrocarbons such as benzene, toluene, and xylene;
halogenated hydrocarbons such as ethylene dichloride, chlorobenzene, and dichloromethane; or
mixtures thereof.

As such a hydrocarbon solvent, it is often preferable to use an aliphatic saturated hydrocarbon mainly from the viewpoint of, for example, safety.
The contact is usually carried out under heating. In the case of heating, the temperature can be arbitrarily selected from temperatures up to the boiling point of the solvent used. The contact time depends on the contact temperature. For example, when n-decane is used as the solvent at a heating temperature of 130°C, the contents exhibit a homogenization phenomenon by contact for about 4 hours, which is an indication of the completion of the contact. The contact is usually carried out using an apparatus for promoting contact, for example, by stirring. The contents are usually heterogeneous at the start of contact, but as the contact proceeds, the contents gradually become homogeneous and finally liquefy.
When the magnesium compound particle of the present invention is used as a carrier of a solid catalyst component in the production of an ethylene-based polymer particle, a preparation method via complete liquefaction is preferably employed from the viewpoint of powder properties of the ethylene-based polymer particle obtained by polymerization.
The magnesium compound liquid (A) thus prepared may be used after removal of the solvent used at the time of contact or may be used without distillation of the solvent, and is usually subjected to the next step without distilling off the solvent. The magnesium compound liquid (A) is usually subjected to the next step without distillation of the solvents.
The method for producing a magnesium compound particle of the present invention includes a contact step of bringing the magnesium compound liquid (A) and an organometallic compound (B) containing a metal element (MB), excluding magnesium, selected from elements in Group 1, Group 2, and Group 13 of the periodic table (hereinafter, also referred to as the "component (B)") into contact with each other.

Examples of the organometallic compound (B) include an organoalkali metal compounds such as butyllithium, and industrially preferred examples thereof include the following aluminum-containing compound.

$$AlR_nX_{3-n} \qquad (1)$$

In the general formula (1), R is a hydrocarbon group having 1 to 20 carbon atoms, and specific examples thereof include a methyl group, an ethyl group, a propyl group, a butyl group, a hexyl group, an octyl group, and a decyl group. X represents a halogen atom such as chlorine atom and bromine atom, or a hydrogen atom. n represents a real number of 1 to 3, preferably 2 or 3. When there are a plurality of Rs, each R may be the same as or different from each other; and when there are a plurality of Xs, each X may be the same as or different from each other. Specifically, the following compound are used as the organoaluminum compound. That is, examples of the organoaluminum compound satisfying the requirements include:

trialkylaluminums such as trimethylaluminum, triethylaluminum, triisopropylaluminum, triisobutylaluminum, trioctylaluminum, and tri-2-ethylhexylaluminum;
alkenylaluminums such as isoprenylaluminum;
dialkylaluminum halides such as dimethylaluminum chloride, diethylaluminum chloride, diisopropylaluminum chloride, diisobutylaluminum chloride, and dimethylaluminum bromide;
alkylaluminum sesquihalides such as methylaluminum sesquichloride, ethylaluminum sesquichloride, isopropylaluminum sesquichloride, butylaluminum sesquichloride, and ethylaluminum sesquibromide;
alkylaluminum dihalides such as methylaluminum dichloride, ethylaluminum dichloride, isopropylaluminum dichloride, and ethylaluminum dibromide; and
alkyl aluminum hydrides such as diethyl aluminum hydride and diisobutyl aluminum hydride.

Among these, preferred are trimethylaluminum, triethylaluminum, triisobutylaluminum, trihexylaluminum, trioctylaluminum, diethylaluminum chloride, ethylaluminum sesquichloride, ethylaluminum dichloride, and diisobutylaluminum hydride.

One of the major points of the present invention is the contact method and contact conditions. Specifically, a method of bringing the magnesium compound liquid (A), which has been mixed at a high speed with a strong shear force, and the organometallic compound (B) into contact with each other is preferable. The apparatus used for high-speed mixing of the magnesium compound liquid (A) is not particularly limited as long as it is a commercially available emulsifying machine or dispersing machine, and examples thereof include batch emulsifying machines such as Ultra-Turrax (manufactured by IKA Japan K.K.), Polytron (manufactured by Kinematica), TK Auto-Homomixer (manufactured by Tokushu Kika Kogyo Co., Ltd.), TK Neo-Mixer (manufactured by Tokushu Kika Kogyo Co., Ltd.), and National Cooking Mixer (manufactured by Matsushita Electric Industrial Co., Ltd.); continuous emulsifying machines such as Ebara Milder (manufactured by Ebara Corporation), TK Pipeline Homomixer and TK Homomic Line Flow (manufactured by Tokushu Kika Kogyo Co., Ltd.), Colloid Mill (manufactured by Nippon Seiki Co., Ltd.), Slusher, Trigonal Wet Pulverizer (manufactured by Mitsui Miike Chemical Engineering Machinery Co., Ltd.), Cavitron (manufactured by Eurotec), and Fine Flow Mill (manufactured by Pacific Machinery & Engineering Co., Ltd.), batch or continuous dual-purpose emulsifying machines such as Clearmix (manufactured by M Technique Co., Ltd.) and Filmix (manufactured by Tokushu Kika Kogyo Co., Ltd.), high-pressure emulsifying machines such as Microfluidizer (manufactured by Mizuho Industrial Co., Ltd.), Nanomaker, Nanomizer (manufactured by Nanomizer Inc.), and APV Gaulin (manufactured by Gaulin), membrane emulsifying machines such as membrane emulsifier (manufactured by REICA Co., Ltd.), vibrating emulsifying machines such as Vibro Mixer (manufactured by REICA Co., Ltd.), and ultrasonic emulsifying machines such as ultrasonic homogenizer (manufactured by Branson).

When the magnesium compound liquid (A) and the organometallic compound (B) are brought into contact with each other, the magnesium compound liquid (A) is preferably in a state of a solution containing a hydrocarbon liquid as described above. The organometallic compound (B) may be diluted in a solvent before use. Usually, it is used as a solution diluted with an aliphatic saturated hydrocarbon solvent such as n-decane or n-hexane, or an aromatic hydrocarbon solvent such as toluene or xylene. As such a hydrocarbon solvent, it is often preferable to use an aliphatic saturated hydrocarbon mainly from the viewpoint of, for example, safety.

In the present invention, a method of adding the organometallic compound (B) to the magnesium compound liquid (A) is preferred.

Preferably, the contact step is usually carried out for 0.6 to 10 hours. If the heat removal capability in the contact system is sufficient, the addition may be completed in a short time, whereas if the capability is insufficient, the addition may be performed over a long time. The organoaluminum compound may be added all at once or may be added in several portions. In this case, it is preferable to provide the contact step in a temperature range of -20°C to 10°C. In particular, the first contact between the magnesium compound liquid (A) and the organometallic compound (B) is preferably carried out

within the above temperature range. Including such a step is often advantageous in stably obtaining particles having a fine particle size. In the contact at the temperature, the molar ratio ([MB]/[Mg]) of the amount of magnesium atoms [Mg] in the magnesium compound liquid (A) to the amount of atoms [MB] of the metal element (MB) in the organometallic compound (B) is preferably in the range of 0.9 to 1.2. The lower limit value is more preferably 1.00 and even more preferably 1.01. On the other hand, the upper limit value is, more preferably 1.17 and even more preferably 1.15.

The amounts of the magnesium compound liquid (A) and the organometallic compound (B) used in the entire step of bringing the magnesium compound liquid (A) and the organometallic compound (B) into contact with each other are preferably 2.5 to 2.96 in terms of the molar ratio ([MBr]/[Mgr]) of the amount of magnesium atoms [Mgr] in the magnesium compound liquid (A) to the amount of atoms [MBr] of the metal element (MB) in the organometallic compound (B). The lower limit value is more preferably 2.60, even more preferably 2.70, and particularly preferably 2.80.

A preferred aspect in the contact step of the magnesium compound liquid (A) and the organometallic compound (B) will be described below.

As the contact between the magnesium compound liquid (A) and the organometallic compound (B) represented by the general formula (1), a preferred aspect will be described, especially, in the case of using an organoaluminum compound as the organometallic compound (B). Preferably, the method is based on a reaction of both liquids, for example, by bringing a hydrocabon diluted solution of a magnesium compound and an organoaluminum compound diluted in a hydrocabon solvent into contact with each other. Although the shape and size of particles produced in this step may differ depending on the formation conditions, in order to obtain a solid product with uniform shape and particle size, it is preferable to avoid a rapid particle formation reaction while maintaining high shear and high-speed mixing as described above. For example, when a magnesium compound and an organoaluminum compound are mixed by contact with each other in a liquid state to form a solid product by mutual reaction, it is preferable to mix them at a low temperature such that no solid is rapidly formed by the contact, and then to raise the temperature to gradually form the solid product. According to this method, it is easy to control the particle size in the ultrafine particle region of the solid product, thus easily obtaining an ultrafine spherical solid product with extremely narrow particle size distribution.

The average particle size of magnesium compound particles obtained by the method as described above can be increased or decreased, for example, by adjusting the mixing speed in the contact step the high-speed mixing.

An olefin-based polymer particle typified by an ethylene-based polymer particle that is (basically) spherical but has an uneven shape on the surface thereof can be produced by using the solid catalyst component for polymerization in which the magnesium compound particle of the present invention is used as a carrier of a polymerization catalyst.

The magnesium compound particles obtained by the method as described above have atoms [Mg] of magnesium derived from the magnesium compound liquid (A) and atoms [MB] of the metal element (MB) derived from the organometallic compound (B). The composition (molar ratio) (molar content [Mg] of magnesium atoms/molar content [MB] of atoms of the metal element (MB)) is 1.0 or more and 11.5 or less. The lower limit value is preferably 5, more preferably 6, even more preferably 7, and particularly preferably 8. On the other hand, the upper limit value is preferably 11.4, more preferably 11.3, and even more preferably 11.2.

As will be described later, when a solid olefin polymerization catalyst using the magnesium compound particle of the present invention is prepared, followed by olefin polymerization in the presence thereof, an olefin polymer particle having an uneven surface shape is obtained. Since the magnesium compound particle of the present invention is too small, it is often difficult to observe the fine surface shape thereof. However, it is presumed that the particle also has a nearly spherical shape with unevenness on the surface thereof. The reason why such a shape is obtained is not clear, but the present inventors suppose as follows.

The main component of a small particle such as the magnesium compound particle of the present invention is a magnesium compound in the component (A), and the component derived from the component (B) is considered a foreign substance. The surface shape of the particle seems to be easily affected by the content of the compound derived from the component (B). Considering the fact that the surface tension of the component (A) is naturally different from that of the component (B), it is presumed that the surface unevenness is more likely to occur in an aspect with a large amount of the component (B) because the foreign substance may be increased, in addition to the influence due to the difference in the surface tensions of the two components. This influence may be remarkable especially in the case of small particles.

In the present invention, since the amount of the component derived from the MB-containing compound (e.g., an organoaluminum compound) is relatively large, it is considered that not only the surface tension at the time of particle formation but also the particle shape at the time of solidification of the compound derived from the component (B), which is a foreign substance, are likely to be affected. Thus, particles having relatively high surface unevenness are likely to be obtained.

In the present invention, the magnesium compound particle is produced under the condition that the amount of the organometallic compound (B) used is relatively small as compared with the amount of the magnesium compound liquid (A) used, but the content of metal element (MB) atoms in the magnesium compound particle is relatively large, which is an unexpected result. Because there are many components derived from the MB atoms on the surface of the particle, there is a possibly that unevenness easily occurs on the surface (if the amount of the organometallic compound (B) used is high

(too high), it is conceivable that the excess organometallic compound (B) may wash off the MB atom-derived components on the surface. That is, the surface may become a smooth shape).

In addition to the above reasons, there is a possibility that an olefin polymer particle having high surface unevenness may be easily obtained due to the influence of the component (A-2) (in this case, the magnesium compound particle may not have a shape with surface unevenness).

When the component (A-2) is an alcohol, the magnesium compound particle of the present invention often contains an alkoxy group (hereinafter, sometimes referred to as (RO)). The magnesium compound particle of the present invention tends to relatively easily contain an alkoxy group (RO). Specifically, the molar ratio of the alkoxy group to the magnesium atom (molar amount of alkoxy group/molar amount of magnesium atom, hereinafter also referred to as "[RO]/[Mg]") is preferably 0.22 to 1.0. The lower limit value thereof is more preferably 0.23 and even more preferably 0,24. On the other hand, the upper limit value is more preferably 0.8, even more preferably 0.6, and particularly preferably 0.55.

It is presumed that the alkoxy group is often bonded to a metal atom of the component (B) to form an alkoxide structure. Such an alkoxy group tends to easily increase the olefin polymerization activity of the olefin polymerization catalyst to be described later. Thus, there is a possibility that unevenness easily occur on the surface when the alkocide is abundant and unevenly distributed in the magnesium compound particle.

On the other hand, the present inventors have also found that when the composition (molar ratio) of the atoms [Mg] of magnesium derived from the magnesium compound liquid (A) and the atoms [MB] of the metal element (MB) derived from the organometallic compound (B) in the magnesium compound particles to be obtained is such that (molar content [Mg] of magnesium atoms)/(molar content [MB] of atoms of the metal element (MB)) is more than 11.5 and 20 or less, the magnesium compound particle to be obtained and the olefin polymer particles obtained using the olefin polymerization catalyst containing the magnesium compound particle tend to be a spherical particle having a smooth surface. The lower limit value is preferably 11.6, more preferably 11.7, and even more preferably 11.8. On the other hand, the upper limit value is preferably 18, more preferably 17, even more preferably 16, and particularly preferably 15.

In the above aspect, since the component derived from the MB-containing compound (e.g., an organoaluminum compound) is relatively small, the control by the surface tension at the time of particle formation is more dominant than the control by the compound derived from the component (B), which is a foreign substance. Thus, it is considered that a particle having a relatively smooth surface is easily obtained.

Alternatively, in the above aspect, since the [RO]/[Mg] tends to be low, uneven distribution of a metal alkoxide moiety is unlikely to occur, and as a result, there is a possibility that a particle having a relatively smooth surface is likely to be obtained.

In order to obtain the magnesium compound particle as described above, for example, the amounts of the magnesium compound liquid (A) and the organometallic compound (B) used in the entire step of bringing the magnesium compound liquid (A) and the organometallic compound (B) into contact with each other are preferably set such that the molar ratio ([MBr]/[Mgr]) of the amount of magnesium atoms [Mgr] in the magnesium compound liquid (A) to the amount of atoms [MBr] of the metal element (MB) in the organometallic compound (B) is 2.97 to 10. The lower limit value is more preferably 2.98 and even more preferably 2.99. On the other hand, the upper limit value is more preferably 9.0, even more preferably 8.0, and particularly preferably 7.0.

When the tendency as described above is utilized, an olefin polymer particle having a desired shape can be produced by controlling the molar ratio (molar content of magnesium atoms [Mg])/(molar content of atoms [MB] of the metal element (MB)) in the range of 1.0 to 20 in the olefin using an olefin polymerization catalyst including the magnesium compound particle to be obtained. That is, the shape of the olefin polymer particle can be controlled.

As production conditions of the magnesium compound particle for performing the control as described above, for example, the amounts of the magnesium compound liquid (A) and the organometallic compound (B) used in the entire step of bringing the magnesium compound liquid (A) and the organometallic compound (B) into contact with each other may be controlled within a range of 2.5 to 10 in terms of the molar ratio ([MBr]/[Mgr]) of the amount of magnesium atoms [Mgr] in the magnesium compound liquid (A) to the amount of atoms [MBr] of the metal element (MB) in the organometallic compound (B) according to the particle having a target shape.

Average Particle Size

The average particle size (volume average size) used in the present invention is measured with image analysis type particle size distribution-measuring software (e.g., MacView manufactured by Mountech Co., Ltd.) from SEM photographs obtained by using a scanning electron microscopic device (e.g., a TM4000 scanning electron microscopic device manufactured by Hitachi High-Tech Corporation) to capture images of three arbitrary locations in a measurement sample of several grams. This method can be applied to the magnesium compound particle described above and the olefin polymer particle described later.

When the particle size of the magnesium compound microparticle is too small, the average particle size can also be calculated by a conventional method from the particle size and the polymerization activity of the olefin polymer obtained

by using the olefin polymerization catalyst containing the magnesium compound microparticle. This method is based on an empirical rule that the shape of the solid polymer particle obtained by polymerizing an olefin using the solid olefin polymerization catalyst is (basically) similar to the shape of the solid olefin polymerization catalyst. Therefore, as a method for controlling the shape of an olefin polymer particle, production methods, production conditions, shape control, etc. of an olefin polymerization catalyst are significant.

The magnesium compound particle of the present invention can be used as a solid catalyst for olefin polymerization by supporting a catalyst for olefin polymerization. An olefin polymer can be produced by polymerizing the olefin using the catalyst. In this case, an olefin polymer having a small particle size is easily obtained as the resulting olefin polymer although it depends on the polymerization amount of the olefin.

Hereinafter, an olefin polymer particle (particularly, an ethylene-based polymer particle (hereinafter, also referred to as the "ethylene-based polymer particle of the present invention")) and an olefin polymerization catalyst which are expected to be obtained will be described.

[Ethylene-based Polymer Particle]

Preferred examples of the ethylene-based polymer particle obtained using the olefin polymerization catalyst of the present invention include an aspect described below.

In this aspect, the intrinsic viscosity [η] measured at 135°C in decalin is in the range of 0.1 to 50 dl/g, at least 95% by weight or more of the ethylene-based polymer particle passes through a mesh sieve with an opening of 37 μm, and the average particle size (d) is 3 μm ≤ d ≤ 25 μm.

Hereinafter, a method of measuring the particle properties defined by each requirement and a method for producing the same will be described.

Intrinsic Viscosity [η]

The intrinsic viscosity [η] is measured using a decalin solvent at 135°C. That is, about 20 mg of granulated pellet is dissolved in 15 ml of decalin, and the specific viscosity $\eta_{SP}$ is measured in an oil bath at 135°C. The decalin solution was diluted by addition of 5 ml of a decalin solvent, and then the specific viscosity $\eta_{SP}$ is measured in the same manner. This dilution operation is repeated twice, and the value $\eta_{SP}/C$ when the concentration (C) is extrapolated to zero is determined as the intrinsic viscosity [η].

$$[\eta] = \lim(\eta SP/C), \ (C \rightarrow 0)$$

The ethylene-based polymer particle of the present invention is required to have an intrinsic viscosity [η] in the range of 0.1 to 50 dl/g, preferably 0.15 to 50 dl/g, and more preferably 0.2 to 50 dl/g. In the case of an ethylene-based polymer particle having an intrinsic viscosity [η] of more than 0.1 dl/g, there is no possibility of partial melting of the polymer particle due to heat generation during polymerization or elution of a part of the produced polymer into a polymerization solvent during slurry polymerization. Therefore, it is expected that collapse of the particle shape of the polymer or inter-particle aggregation does not occur.

In addition, when the intrinsic viscosity [η] is 5 dl/g or more, more preferably 6 dl/g or more, and even more preferably 10 dl/g or more, abrasion resistance, impact resistance, and self-lubricating properties are excellent. In the case of an ultra-high molecular weight olefin polymer having an intrinsic viscosity [n] of 5 dl/g or more, it tends to be difficult to produce microparticles, for example, by an emulsification method.

Amount Passing through Mesh Sieve with Opening of 37 μm

The ethylene-based polymer particles obtained by using the olefin polymerization catalyst of the present invention preferably pass through a mesh sieve (Tyler #400) with an opening of 37 μm in an amount of 95% by weight or more, more preferably 98% by weight or more, even more preferably 99.7% by weight or more, and most preferably 100% by weight, using a vibrating sieve or an ultrasonic vibrating sieve. That is, the ethylene-based polymer particles having a passing amount of more than 95% by weight means that the abundance of coarse particle is small. In such polymer particles, it does not occur that the presence of coarse particles reduces the flowability or dispersibility and inhibits the closest packing, which is ideal packing as a powder.

Average Particle Size

The average particle size (volume average size) used in the present invention is measured with image analysis type particle size distribution-measuring software (e.g., MacView manufactured by Mountech Co., Ltd.) from SEM

photographs obtained by using a scanning electron microscopic device (e.g., a TM4000 scanning electron microscopic device manufactured by Hitachi High-Tech Corporation) to capture images of three arbitrary locations in a measurement sample of several grams.

As described above, when the particle size of the magnesium compound particle is too small, the average particle size can also be calculated by a conventional method from the particle size and the polymerization activity of the olefin polymer obtained by using the olefin polymerization catalyst containing the magnesium compound particle.

The ethylene-based polymer particles obtained using the olefin polymerization catalyst of the present invention preferably has an average particle size (d) of 3 μm or more and 25 μm or less. The upper limit value is more preferably 20 μm and even more preferably 15 μm. On the other hand, the lower limit value is more preferably 4 μm and even more preferably 5 μm. The generally preferred range is 3 to 15 μm, and furthermore, 3 μm ≤ d ≤ 10 μm.

When the average particle size of the ethylene-based polymer particles is 3 μm or more, handling at the time of molding is relatively easy and the surrounding environment is less likely to be contaminated with microparticles. Therefore, quality defects due to environmental contamination can be easily controlled even when the ethylene-based polymer particles are used in the production process of various precision instruments, and sanitary goods, for example.

Since the possibility of adhering to clothes or being inhaled into the human body is reduced, such an ethylene-based polymer particle is also excellent in ensuring the safety of the working environment. In addition, since it is relatively easy to handle and excellent in die packing properties in compression molding of sintered filters, etc., a filter having a uniform pore size can be efficiently obtained.

When the average particle size is 25 μm or less, more preferably 20 μm or less, even more preferably 15 μm or less, and particularly preferably 10 μm or less, the specific surface area per mass of the particles is large, and the particles can be suitably used as a filler for a column for highly efficient separation of chemical and biological substances, an adsorbent, and a catalyst carrier. Furthermore, properties of the ethylene-based polymer particles affect the physical properties after molding, and a filter having a small pore size can be obtained as a material for a sintered filter, and in addition, a good feeling effect on the skin can be obtained as a cosmetic material.

The olefin polymer particles α1 according to one aspect of the present invention are novel olefin polymer particles and have an average particle size of 3 to 25 μm and an intrinsic viscosity [n] of 5 to 50 dl/g. In addition, the pore volume corresponding to pores having a pore size in the range of 0.1 to 1 μm as measured with a mercury porosimeter is 25 to 100 $mm^3/g$. However, the present inventors consider that the pore volume in the present invention is a special parameter that may include a value derived from the pores and may also include a measurement value derived from the uneven surface shape of the particles, which is strongly presumed from the shape of the olefin polymer particles in the electron micrographs of Examples separately presented in the drawings and the results of the pore volume.

Regarding the surface shape of the olefin polymer particles α1 of the present invention, it is preferable that particles having a shape in which five or more protrusions are observed on the half surface of the particles occupy 30% or more, and more preferably 50% or more, in terms of the number ratio, of particles observed in an arbitrary 100 μm square region in a photograph magnified 1000 times or more with the electron microscope. In the present invention, the protrusions are defined to have a width (width of the thickest portion of each protrusion) of 1/100 to 1/3 of the diameter of the olefin polymer particles.

The mercury porosimeter measurement is performed by a conventional method using a mercury porosimeter (e.g., trade name: PoreMaster 60GT, manufactured by Quantachrome). The pore volume value is a value determined by analyzing the measurement data with analysis software (e.g., trade name: Poremaster for Windows) attached to the device and calculating the cumulative value of the pore volume of pores having a pore size of 0.1 to 1 μm.

The electron micrograph was observed and taken by a conventional method using, for example, a TM4000Plus scanning electron microscope (manufactured by Hitachi High-Tech Corporation).

The constituents of ethylene-based polymer particles of the present invention include 90 to 100 mol % of a constituent unit derived from ethylene and 0 to 10 mol % of a constituent unit derived from one or more monomers selected from a linear or branched α-olefin having 3 to 6 carbon atoms, a cyclic olefin, a polar group-containing olefin, a diene, a triene, and an aromatic vinyl compound. The linear or branched α-olefin having 3 to 6 carbon atoms include propylene, 1-butene, 3-methyl-1-butene, 1-pentene, 3-methyl-1-butene, 1-hexene, 4-methyl-1-pentene, and 3-methyl-1-pentene, of which propylene, 1-butene, 1-hexene, and 4-methyl-1-pentene are preferred.

Examples of the cyclic olefin include cyclopentene, cycloheptene, norbornene, 5-methyl-2-norbornene, tetracyclododecene, and 2-methyl-1,4,5,8-dimethano-1,2,3,4,4a,5,8,8a-octahydronaphthalene.

Examples of the polar group-containing olefin include:

α,β-unsaturated carboxylic acids such as acrylic acid, methacrylic acid, fumaric acid, maleic anhydride, itaconic acid, itaconic anhydride, and bicyclo(2,2,1)-5-heptene-2,3-dicarboxylic anhydride, and metal salts of α,β-unsaturated carboxylic acid such as sodium salts, potassium salts, lithium salts, zinc salts, magnesium salts, and calcium salts thereof;

α,β-unsaturated carboxylic acid esters such as methyl acrylate, ethyl acrylate, n-propyl acrylate, isopropyl acrylate, n-butyl acrylate, isobutyl acrylate, tert-butyl acrylate, 2-ethylhexyl acrylate, methyl methacrylate, ethyl methacrylate, n-propyl methacrylate, isopropyl methacrylate, n-butyl methacrylate, and isobutyl methacrylate;
vinyl esters such as vinyl acetate, vinyl propionate, vinyl caproate, vinyl caprate, vinyl laurate, vinyl stearate, and vinyl trifluoroacetate; and
unsaturated glycidyls such as glycidyl acrylate, glycidyl methacrylate, and monoglycidyl itaconate.

The diene or triene include butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidenenorbornene, vinylnorbornene, dicyclopentadiene, 7-methyl-1,6-octadiene, 4-ethylidene-8-methyl-1,7-nonadiene, and 5,9-dimethyl-1,4,8-decatriene.
Examples of the aromatic vinyl compound include:

mono- or poly-alkylstyrenes such as styrene, o-methylstyrene, m-methylstyrene, p-methylstyrene, o,p-dimethylstyrene, o-ethylstyrene, m-ethylstyrene, and p-ethylstyrene;
functional group-containing styrene derivatives such as methoxystyrene, ethoxystyrene, vinylbenzoic acid, methyl vinylbenzoate, vinylbenzyl acetate, hydroxystyrene, o-chlorostyrene, p-chlorostyrene, and divinylbenzene; and
3-phenylpropylene, 4-phenylpropylene, and α-methylstyrene.

One or more of these are used.
Hereinafter, the method for producing the ethylene-based polymer particles (in general) of the present invention will be described.
The ethylene-based polymer particles of the present invention are produced by homopolymerizing ethylene or copolymerizing ethylene and one or more monomers selected from a linear or branched α-olefin having 3 to 6 carbon atoms, a cyclic olefin, a polar group-containing olefin, a diene, a triene, and an aromatic vinyl compound using the magnesium compound particles of the present invention described below as a carrier component of a solid catalyst component for polymerization.

[Method for Producing Ethylene-based Polymer Particle]

The method for producing an ethylene-based polymer particle of the present invention will be described in more detail below.
The ethylene-based polymer particles of the present invention can be obtained by homopolymerizing ethylene or polymerizing ethylene with at least one monomer selected from a linear or branched α-olefin having 3 to 6 carbon atoms, a cyclic olefin, a polar group-containing olefin, a diene, a triene, and an aromatic vinyl compound in the presence of a polymerization catalyst component including:

a solid catalyst component including a transition metal compound or (preferably) a liquid titanium compound supported on the magnesium compound particles of the present invention;
an organometallic compound; and, if desired,
a nonionic surfactant.

Hereinafter, the solid catalyst component will be first described.
In the present invention, the term "supported" refers to a state in which even when the transition metal compound or the liquid titanium compound is stirred in at least one solvent selected from hexane, decane, and toluene under normal pressure at room temperature for 1 minute to 1 hour, the dissolved content of the transition metal compound or the liquid titanium compound in the solvent is 1% by weight or less.
The transition metal compound used in the preparation of the magnesium compound particles of the present invention, i.e., the solid catalyst component using the magnesium-containing carrier component is not particularly limited, and for example, compounds disclosed in the following literature can be used.

1) JPH11-315109
2) JP2000-239312A
3) EP1008595A
4) WO01/55213
5) JP2001-2731A
6) EP1043341B
7) WO98/27124
8) Chemical Review 103, 283 (2003)

9) Bulletin of the Chemical Society of Japan 76, 1493 (2003)
10) Angewandte Chemie, International Edition in English 34 (1995)
11) Chemical Review 8, 2587 (1998) 2587

In order to support the transition metal compound on the magnesium compound particles of the present invention, the magnesium compound particle and the transition metal compound may be mixed with stirring in an inert solvent for a predetermined time, followed by collection by filtration. A heating operation may also be performed at this time. Examples of the inert solvent include aromatic hydrocarbons such as benzene, toluene, and xylene, saturated aliphatic hydrocarbons such as hexane, heptane, and decane, alicyclic hydrocarbons such as cyclohexane and methylcyclopentane, halogenated hydrocarbons such as ethylene chloride, chlorobenzene, and dichloromethane, and mixtures thereof. The temperature in the case of heating depends on the solvent to be used, but is usually from a temperature equal to or higher than the freezing point of the solvent to 200°C, and preferably up to 150°C. The stirring and mixing time depends on the temperature but is usually for 30 seconds to 24 hours and preferably 10 minutes to 10 hours. The collection by filtration may be conducted by a filtration method generally used in organic synthetic chemistry. The cake component after the collection by filtration may be washed, if necessary, with an aromatic hydrocarbon or an aliphatic hydrocarbon described above.

Preferred examples of the transition metal compound component include a compound having the following structures.

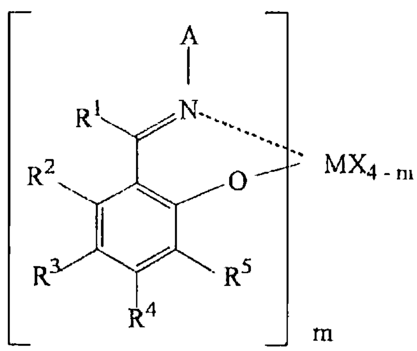

(7)

wherein M represents Zr or Hf; m represents an integer of 1 or 2; A represents a 6-membered cyclic hydrocarbon group having one or more alkyl substituents at the 2-position, which may be saturated or unsaturated; $R^1$ to $R^5$, which may be the same as or different from each other, each represent a hydrogen atom, a halogen atom, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group, or a tin-containing group, and two or more thereof may be linked to each other to form a ring; and
when m is 2, two of the groups represented by $R^1$ to $R^5$ may be linked, provided that $R^1$s are not be linked to each other; (4-m) is a number satisfying the valence of M; X represents a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group, or a tin-containing group; a plurality of groups represented by X may be the same as or different from each other; and a plurality of groups represented by X may bond to each other to form a ring.

As the transition metal compound that can be used in the present invention, a known compound can be used without limitation, and examples thereof include the compounds disclosed as specific examples in Patent Literatures 1 and 2. Some of them are introduced as follows.

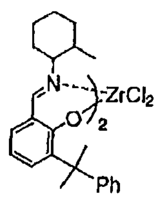 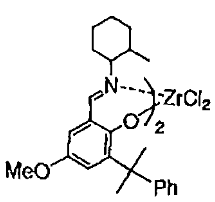 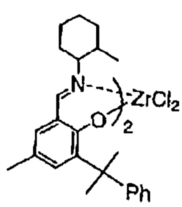 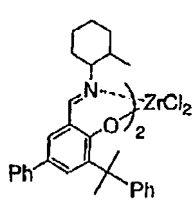

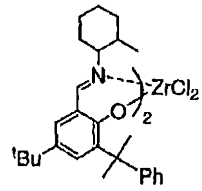 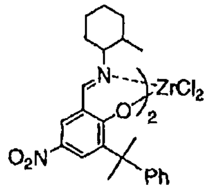 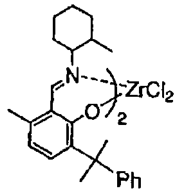 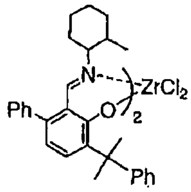

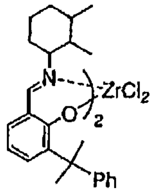 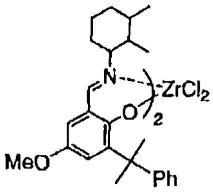 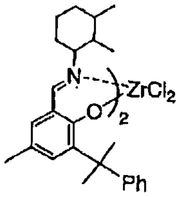 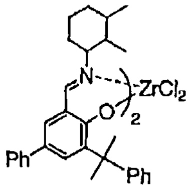

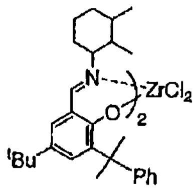 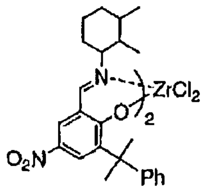 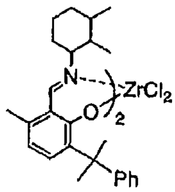 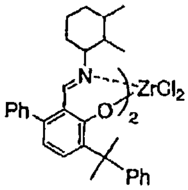

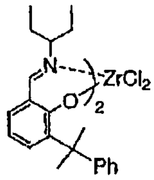 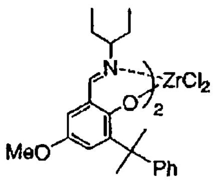 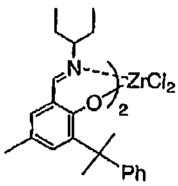 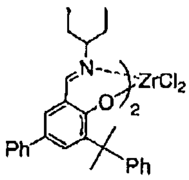

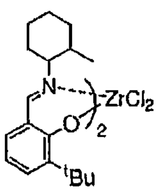 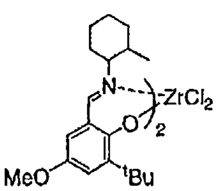 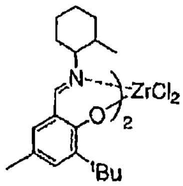 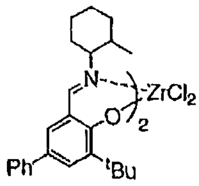

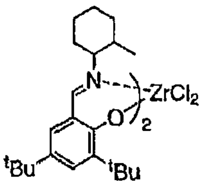 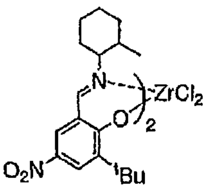 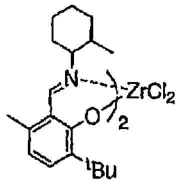 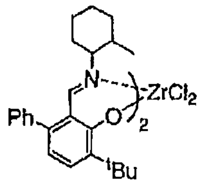

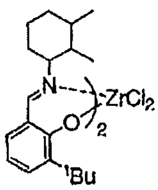 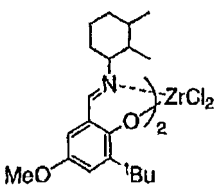 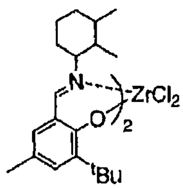 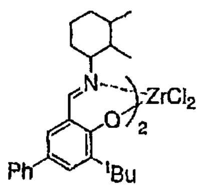

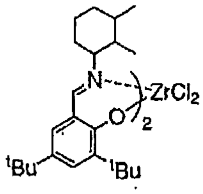 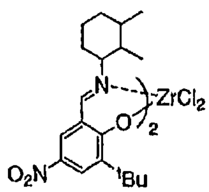 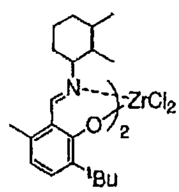 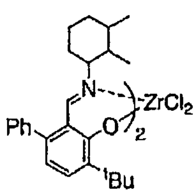

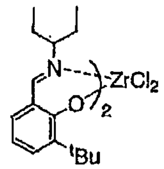 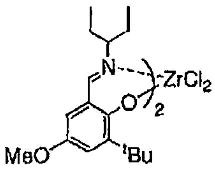 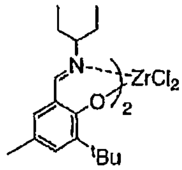 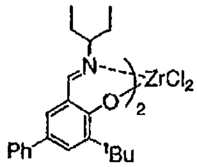

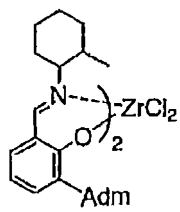 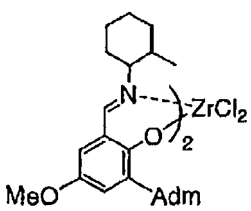 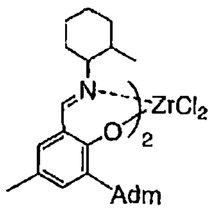 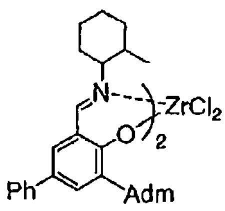

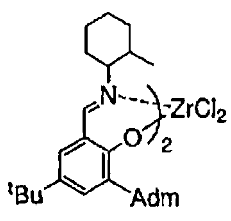 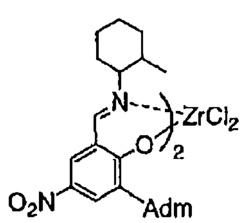 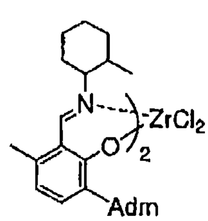 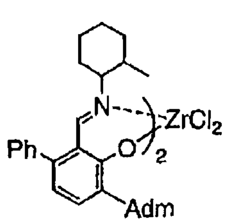

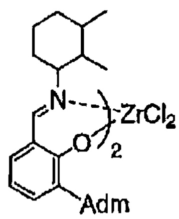 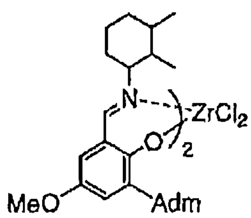 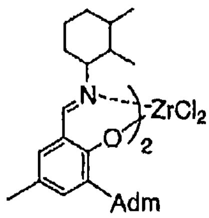 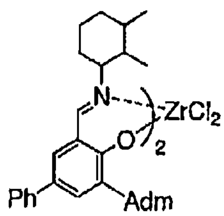

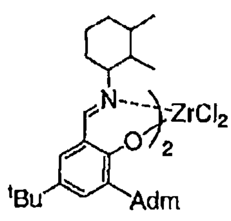 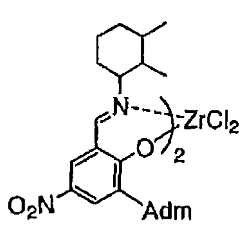 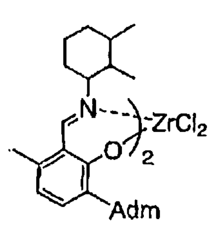 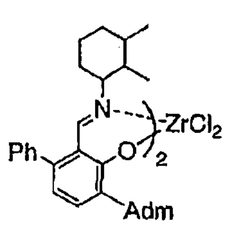

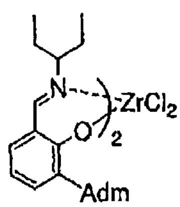 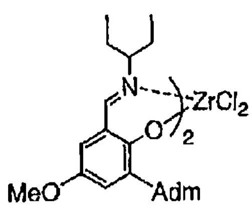 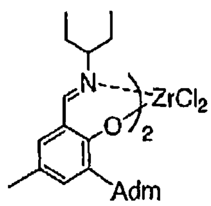 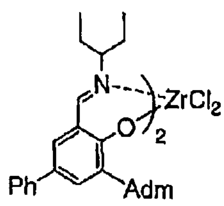

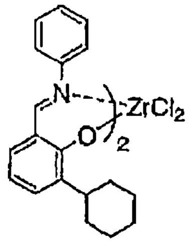 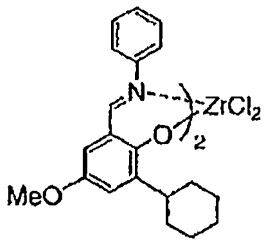 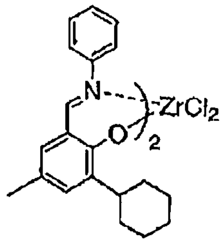 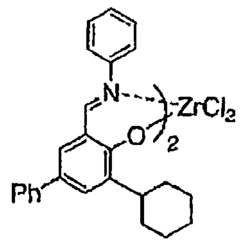

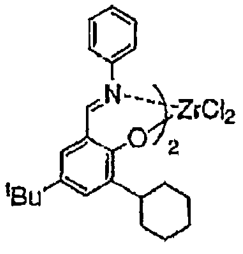 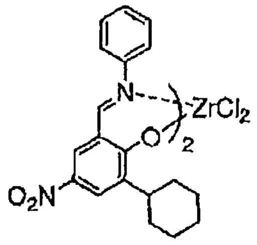 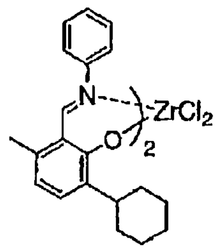 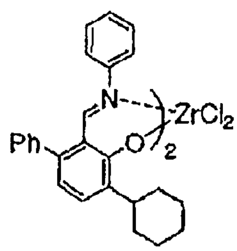

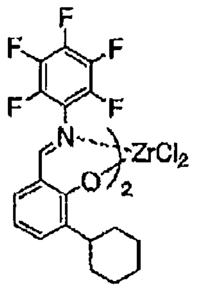 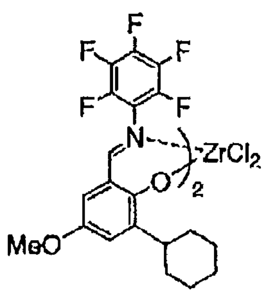 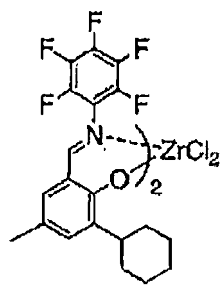 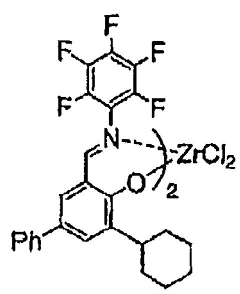

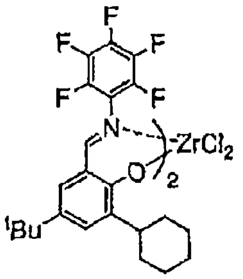 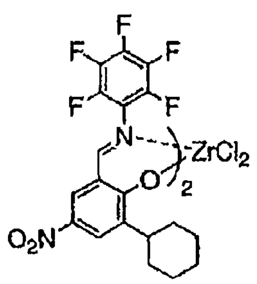 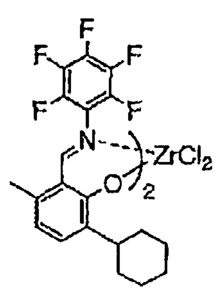 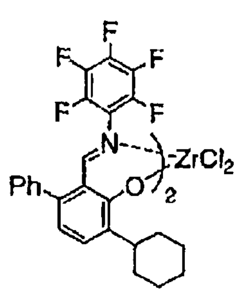

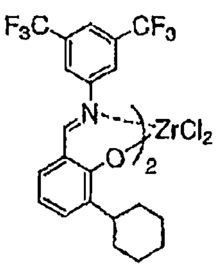 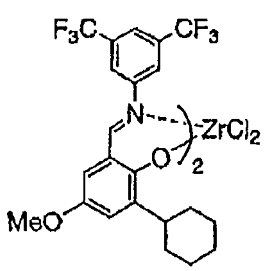 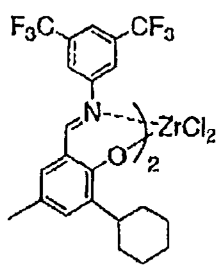 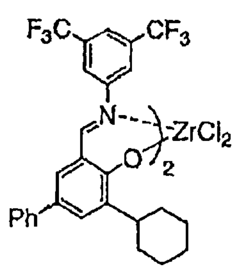

wherein Adm represents an adamantyl group.

The transition metal compound may be a compound represented by the following general formula (8).

$$RQ(Pz^1)_i(Pz^2)_{3-i}MY_mZ_n \qquad (8)$$

In the general formula (8), $RQ(PZ^1)_i(Pz^2)_{3-i}$ is a tridentate anionic or neutral ligand, where R represents a group selected from the group consisting of a hydrogen atom, a halogen atom, a hydrocarbon group, a heterocyclic compound residue, an oxygen-containing group, a sulfur-containing group, a nitrogen-containing group, a boron-containing group,

an aluminum-containing group, a phosphorus-containing group, a halogen-containing group, a silicon-containing group, a germanium-containing group, and a tin-containing group. The halogen atom, the hydrocarbon group, the heterocyclic compound residue, the oxygen-containing group, the sulfur-containing group, the nitrogen-containing group, the boron-containing group, the aluminum-containing group, the phosphorus-containing group, the halogen-containing group, the silicon-containing group, the germanium-containing group, and the tin-containing group may be the groups listed in the description of X in the general formula (7).

In the general formula (8), Q represents a tetravalent group selected from the group consisting of boron, carbon, silicon, germanium, tin, and lead, and boron, carbon, and silicon are particularly preferred.

In the general formula (8), $Pz^1$ is a pyrazolyl group in which at least the 3-position is substituted, for example, with an unsubstituted aryl group, a substituted aryl group, an alkyl group having 3 or more carbon atoms, a cycloalkyl group, an amino group, or an oxyhydrocarbon group. Examples of the unsubstituted aryl group include a phenyl group, a naphthyl group, and a fluorenyl group. The substituted aryl group includes a group resulting from substitution of one or more nuclear hydrogens of the unsubstituted aryl group with an alkyl group, aryl group, or aralkyl group having 1 to 20 carbon atoms. $Pz^1$ is preferably a pyrazolyl group in which the 3-position is substituted with a 2,4,6-trimethylphenyl group, a 2,4,6-triisopropylphenyl group, a 2,3,4,5,6-pentamethylphenyl group, or a 4-tert-butyl-2,6-dimethylphenyl group, particularly preferably a pyrazolyl group in which the 3-position is substituted with a 2,4,6-trimethylphenyl group.

$Pz^2$ represents an unsubstituted pyrazolyl group or a substituted pyrazolyl group. The substituted pyrazolyl group may be the same as the $Pz^1$ or may be such that a position other than the 3-position is further substituted with a substituent described for the substituted aryl group.

In the general formula (8), M represents a transition metal atom selected from Groups 3 to 11 of the periodic table, specifically, a metal atom in Group 3 including scandium, yttrium, lanthanides, and actinides; a metal atom in Group 4 including titanium, zirconium, and hafnium; a metal atom in Group 5 including vanadium, niobium, and tantalum; a metal atom in Group 6 including chromium, molybdenum, and tungsten; a metal atom in Group 7 including manganese, technetium, and rhenium; a metal atom in Group 8 including iron, ruthenium, and osmium; a metal atom in Group 9 including cobalt, rhodium, and iridium; a metal atom in Group 10 including nickel, palladium, and platinum; or a metal atom in Group 11 including copper, silver, and gold. Among these, metal atoms in Groups 3, 4, 5, and 6 are preferred, of which transition metals such as yttrium, titanium, zirconium, hafnium, vanadium, and chromium are more preferred. The transition metal atom M is even more preferably a transition metal atom in Group 4 or Group 5 of the periodic table in the valence state of 2, 3, or 4, and titanium, zirconium, hafnium, and vanadium are particularly preferred. When the transition metal atom M is titanium or vanadium, the metal is particularly preferably trivalent.

X represents a hydrogen atom, a halogen atom, an oxygen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group, or a tin-containing group; Y represents a neutral ligand having an electron-donating group; and m is a number satisfying the valence of M. When m is 2 or more, a plurality of atoms or groups represented by X may be the same as or different from each other, and the plurality of groups represented by X may be linked together to form a ring. n represents an integer of 0 to 3.

When X is an oxygen atom, M and X bond via a double bond.

When m is 2 or more, a plurality of atoms or groups represented by X may be the same as or different from each other, and a plurality of groups represented by X may bond to each other to form a ring.

m is the number satisfying the valence of M, which is determined by the valence of the transition metal atom M and the valence of X, and is the number such that these positive and negative valences are neutralized. When the absolute value of the valence of the transition metal atom M is a and the absolute value of the valence of X is b, a relationship of $a-2 = B \times n$ is established. More specifically, for example, when M is $Ti^{4+}$ and X is $Cl^-$, n is 2.

In the general formula (8), Y represents a neutral ligand having an electron-donating group, and n, which represents the number of Y, is an integer of 0 to 3, preferably 1 or 2. The electron-donating group is a group having an unpaired electron that can be donated to a metal, and Y may be any neutral ligand having an electron-donating property. Specific examples of the neutral ligand Y include:

linear or cyclic saturated or unsaturated ethers such as diethyl ether, dimethyl ether, diisopropyl ether, tetrahydrofuran, furan, dimethylfuran, anisole, diphenyl ether, and methyl-t-butyl ether;

linear or cyclic saturated or unsaturated aldehydes such as acetaldehyde, propionaldehyde, n-butyraldehyde, benzaldehyde, p-nitrobenzaldehyde, p-tolualdehyde, and phenylacetaldehyde;

linear or cyclic saturated or unsaturated ketones such as acetone, methyl ethyl ketone, methyl-n-propyl ketone, acetophenone, benzophenone, n-butyrophenone, and benzyl methyl ketone;

linear or cyclic saturated or unsaturated amides such as formamide, acetamide, benzamide, n-valeramide, stearamide, N,N-dimethylformamide, N,N-dimethylacetamide, N,N-diethylpropionamide, and N,N-dimethyl-n-butyramide;

linear or cyclic saturated or unsaturated anhydrides such as acetic anhydride, succinic anhydride, and maleic anhydride;
linear or cyclic saturated or unsaturated imides such as succinimide and phthalimide;
linear or cyclic saturated or unsaturated esters such as methyl acetate, ethyl acetate, benzyl acetate, phenyl acetate, ethyl formate, ethyl propionate, ethyl stearate, and ethyl benzoate;
linear or cyclic saturated or unsaturated amines such as trimethylamine, triethylamine, triphenylamine, dimethylamine, aniline, pyrrolidine, piperidine, and morpholine;
nitrogen-containing heterocyclic compounds such as pyridine, α- picoline, β-picoline, quinoline, isoquinoline, 2-methylpyridine, pyrrole, oxazole, imidazole, pyrazole, and indole;
sulfur-containing heterocyclic compounds such as thiophene and thiazole;
phosphines such as trimethylphosphine, triethylphosphine, tri-n-butylphosphine, and triphenylphosphine;
saturated or unsaturated nitriles such as acetonitrile and benzonitrile;
inorganic salts such as lithium chloride, sodium chloride, potassium chloride, magnesium chloride and calcium chloride, and
inorganic compounds such as carbon monoxide and carbon dioxide; and
the organometallic compound (B).

Furthermore, these compounds may be partially substituted with a substituent such as an alkyl group, a halogen group, a nitro group, a carbonyl group, and an amino group. Among these neutral ligands, ethers, aldehydes, ketones, nitrogen-containing heterocyclic compounds, and inorganic salts are preferred as Y in the formula (7).
In the general formula (8), i is an integer of 1 to 3, preferably 2 or 3.
In the present invention, among the specific transition metal compounds satisfying the above requirements, [hydrobis(3-mesitylpyrazol-1-yl)(5-mesitylpyrazol-1-yl)]borate zirconium trichloride or [hydrotris(3-mesitylpyrazol-1-yl)] borate zirconium trichloride is particularly preferred.
In addition, the transition metal compound may form a complex such as a dimer, a trimer, or an oligomer via such a neutral ligand or may form a crosslinked structure such as a μ-oxo compound via such a neutral ligand.
The organometallic compound contained in the polymerization catalyst is mainly used as a component (scavenger) for inactivating a harmful impurity in the polymerization system. Of course, it may also function as a co-catalyst for olefin polymerization. The organometallic compound is not particularly limited as long as it is a known organometallic compound exhibiting such performances. Specific examples of such an organometallic compound include the organometallic compound (B) described above, and the organometallic compound represented by the general formula (1): $AlR_nX_{3-n}$ (e.g., triisobutylaluminum). Of course, an organometallic compound such as an organometallic oxy compound, which is used for a known olefin polymerization catalyst, can also be used.
By using the catalyst as described above, it is possible to obtain an ethylene-based polymer particle having a fine particle size or a functional group-containing olefin polymer particle (e.g., a functional group-containing ethylene-based polymer particle) depending on a compound having a polymerizable double bond such as an olefin to be used. It is also possible to obtain the functional group-containing ethylene-based polymer particle by modifying the ethylene-based polymer particle having a fine particle size.
Polymer obtained by carrying out, for example, slurry polymerization, or vapor phase polymerization using the magnesium compound particles of the present invention having a small particle size and possibly having an uneven particle surface shape, which are obtained as described above, or the magnesium compound particles having a relatively large number of alkoxy groups as a carrier of a solid catalyst component of a polymerization catalyst, i.e., ethylene-based polymer particles (the particles α and the particles α1) also have a small particle size and good flowability. The functional group-containing ethylene-based polymer particle, which is a polymer obtained by modifying the resulting polymer, also has a small particle size and good flowability. In particular, since the ethylene-based polymer particles have an uneven shape on the surface thereof, the particles are expected to have excellent particle flowability.
The ethylene-based polymer particles can be molded by various molding methods. Since the ethylene-based polymer particles and the functional group-containing ethylene-based polymer particles are characterized by a small particle size and a spherical shape, a preferred example is a shaped article obtained by a molding method that can utilize the characteristics as they are. Specifically, a shaped article having a desired shape and function can be obtained, for example, by compression-molding that includes filling the ethylene-based polymer particles into a mold with pushing them, followed by compression at a temperature equal to or lower than the melting temperature of the polymer, or by so-called melt press-molding that includes compressing the ethylene-based polymer particles, followed by melt-compression at a temperature equal to or higher than the melting temperature. In addition, other resins may be used in combination, or various additives may be mixed and molded, depending on the required properties of the shaped article. Since the particle size is small, even a polymer having a relatively high molecular weight is likely to be in a molten state. Thus, when the polymer is used for extrusion molding, injection molding, etc. of a high molecular weight polymer, it is expected that a film, a sheet, or an injection-molded article, which have few fisheyes, is obtained.

Examples of the shaped article obtained by molding the ethylene-based polymer particles and/or the functional group-containing ethylene-based polymer particles of the present invention include a light diffusion film, an electronic book substrate, a member for a separator of a lithium battery or a lithium ion secondary battery, a member for an optical filter, a member for electronic paper, a pore-forming material such as an air-permeable film, and a sintered filter.

The ethylene-based polymer particles and the functional group-containing ethylene-based polymer particles of the present invention can be suitably used as an ultraviolet absorber, an antioxidant, an anti-blocking agent, a material for cosmetics (foundation), a resin modifier, a slipperiness imparting agent, a toner, a delusterant for paint, a light diffusive additive, an insulating filler, a nucleating agent for crystallization, a filler for chromatography, a carrier for an immunodiagnostic agent, a spacer for forming a gap of a liquid crystal substrate, and a catalyst carrier.

Furthermore, since the ethylene-based polymer particles and the functional group-containing ethylene-based polymer particles of the present invention have a small particle size and a shape with surface unevenness, it is possible to obtain a sintered body which is a porous body having a small pore size, a so-called pore size, and a uniform pore size, i.e., a narrow pore size distribution, and the sintered body can be preferably used as a filter for filtration of industrial water, a filter for filtration, for example, of drinking water, juice, wine, and alcoholic beverages. It is expected that a special filtration function can be imparted because the uneven shape of the surface provides, for example, a wide surface area.

In addition, by selecting the production method and production conditions of the magnesium compound particles, it is also possible to produce olefin polymer particles (particles $\beta$) having a smooth surface, i.e., to control the shape of the olefin polymer particles. The olefin polymer particles ($\beta$) can also be used as raw materials for the same applications as described above. In this case, it is expected that the performance of the application can be adjusted by the particle shape.

In addition, by producing a sintered body using the functional group-containing ethylene-based polymer particles of the present invention, it is possible to obtain a uniformly modified sintered body without the need for modification after the production of the sintered body.

Examples

Hereinafter, the present invention will be described in detail with reference to Examples, but the present invention is not limited to these Examples.

(Method of Measuring Average Particle Size of Polymer Particle)

The average particle size was determined with image analysis type particle size distribution-measuring software (e.g., MacView manufactured by Mountech Co., Ltd.) from SEM photographs obtained by using a TM4000 scanning electron microscopic device manufactured by Hitachi High-Tech Corporation to capture images of three arbitrary locations in a measurement sample of several grams.

(Polymerization Activity (Mileage))

The Mg content ratio of the obtained polymer particles was measured using an ICPE 9820 type ICP measurement apparatus manufactured by Shimadzu Corporation, and the polymerization activity based on Mg metal was calculated by a conventional method.

(Method of Measuring Average Particle Size of Mg Compound Microparticle)

It was calculated by a conventional method using the average particle size of the polymer particles and the measurement values of the polymerization activity were used.

(Above-described Mercury Porosimeter Measurement)

It was measured by a conventional method using a mercury porosimeter (trade name: PoreMaster 60GT, manufactured by Quantachrome). The pore volume value was determined by analyzing the measurement data with analysis software (e.g., trade name: Poremaster for Windows) attached to the device and calculating the cumulative value of the pore volume of pores having a pore size of 0.1 to 1 $\mu$m.

(Electron Microscopy)

The electron micrographs were observed and photographed at a magnification of 1000 times by a conventional method using, for example, a TM4000Plus scanning electron microscope (manufactured by Hitachi High-Tech Corporation).

From the photograph, the percentage of particles having a shape in which five or more protrusions were observed on the half surface of the particles in the particles visually observed in an arbitrary 100 μm square region was determined. The protrusion has a width of 1/100 to 1/3 of the diameter of the particle.

(Intrinsic Viscosity [η])

According to the method of ASTM D4020 Standard, the polymer particles were dissolved in the decalin and the intrinsic viscosity [η] was measured at a temperature of 135°C in decalin.

[Example 1]

Preparation of Component (Al)

A homogeneous solution (the component (A1)) was obtained by mixing 95.2 g (1.0 mol) of anhydrous magnesium chloride, 332 ml of decane, 260.5 g (2.0 mol) of 2-ethyl-1-hexanol, and 298.6 g (1.0 mol) of 2-octyl-1-dodecanol, followed by reaction at 140°C for 3 hours.

Preparation of Magnesium Compound Particle (X-1)

Into a sufficiently nitrogen-substituted flask having an internal volume of 1000 ml, 50 ml of the component (A) (50 mmol in terms of magnesium atom) and 400 ml of purified decane were charged, and then 51.5 mmol of triethylaluminum (Al/Mg = 1.03 m.r.), which had been diluted with purified decane, was charged dropwise over 1 hour using CLEARMIX CLM-0.8S manufactured by Organo under stirring at a rotation speed of 20000 rpm while maintaining the liquid temperature at 0°C. Thereafter, the liquid temperature was raised to 80°C over 5 hours, and the mixture was reacted for 1 hour. Next, while maintaining the liquid temperature at 80°C, 92 mmol of triethylaluminum (total Al/Mg = 2.87 m.r.), which had been diluted with purified decane, was again charged dropwise over 1 hour. Then, the mixture was further heated and reacted for 1 hour. After completion of the reaction, the solid portion was collected by filtration, sufficiently washed with decane, and 100 ml of decane was added thereto to obtain decane slurry of the magnesium compound particles (X-1). The resulting magnesium compound particles (X-1) had an average particle size of 0.86 μm.

The other results are shown in Table 1.

Synthesis of Solid Catalyst Component Using Magnesium Compound Particle (X-1)

Into a nitrogen-substituted 200-mL glass reactor, 68 mL of decane was loaded, and 18 ml of decane slurry (3.8 mmol in terms of Mg atom) of the magnesium compound particles (X-1) prepared above was charged under stirring. Next, 10 mL of decane slurry (0.0021 mmol/mL in terms of Zr atom) of a transition metal compound represented by the following formula was added dropwise, and the mixture was reacted at 35°C for 4 hours. Thereafter, the reactant was filtered, washed twice with 50 ml of decane, and filtered. Then, 100 mL of decane was added to prepared decane slurry of solid catalyst component (1). A portion of the resulting slurry of the solid catalyst component (1) was collected to determine the concentration. The Zr concentration was 0.00020 mmol/mL (where 94 mol% of the supplied transition metal compound was supported).

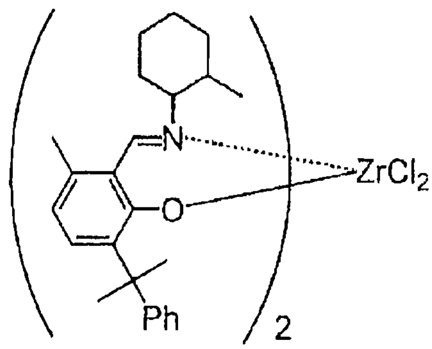

Polymerization of ethylene

Into a sufficiently nitrogen-substituted stainless steel autoclave having an internal volume of 1000 ml, 500 ml of decane was charged and ethylene was circulated at 100 L/hr for 15 minutes at room temperature to saturate the liquid

phase and the vapor phase. Subsequently, the temperature was raised to 65°C. Then, while ethylene was circulated at 0.4 L/hr, 1.25 ml of a decane solution of triisobutylaluminum (1.0 mmol/ml in terms of Al atom) and 4.2 ml of the slurry of the solid catalyst component (1) (0.16 mmol in terms of Mg atom and 0.00083 mmol in terms of Zr atom) were added, and the mixture was stirred for 5 minutes while maintaining the temperature, followed by the addition of 90 mg of Emulgen.

Thereafter, the autoclave was set to a closed system, and 10 mL of hydrogen was added. After the temperature was raised to 70°C, ethylene was supplied at a rate of 1.0 L/hr. Once the pressure reached 0.35 MPaG, ethylene was supplied so as to maintain 0.35 MPaG. When the amount of ethylene supplied after rising the temperature to 70°C reached 56 L, supply of ethylene was stopped, the autoclave was cooled, and ethylene was depressurized (ethylene supply time: 147 minutes). The resulting polymer slurry was filtered, washed with hexane, and dried under reduced pressure at 80°C for 10 hours to give 62 g of polymer. The resulting polymer had an uneven shape on the surface thereof.

[Examples 2 to 4]

Hereinafter, magnesium compound particles were produced in the same manner as in Example 1 except that the conditions listed in Table 1 were applied, and a polymer was obtained using the magnesium compound particles. Table 1 shows the results.

In Examples 2 to 4, the resulting polymer had an uneven shape on the surface thereof.

Table 1

| | During Production | | | Magnesium Compound Particle | | | Polymer | | | |
|---|---|---|---|---|---|---|---|---|---|---|
| | Al/Mg@ 0°C /m.r. | Al/Mg@ 80°C /m.r. | Al/Mg (whole) /m.r. | Mg/Al /m.r. | Alkoxy group/Mg /m.r. | Average particle size /μm | Mileage/ (kg/mmol-Mg) | [η] /dL/g | Average particle size /μm | Shape |
| Example 1 | 1.03 | 1.84 | 2.87 | 8.1 | 0.36 | 0.86 | 2.9 | 15.7 | 14.7 | highly uneven |
| Example 2 | 1.06 | 1.85 | 2.91 | 7.6 | 0.36 | 0.77 | 2.9 | 15.2 | 13.4 | highly uneven |
| Example 3 | 1.09 | 1.85 | 2.94 | 9.0 | 0.26 | 0.74 | 2.9 | 14.5 | 12.7 | highly uneven |
| Example 4 | 1.06 | 1.90 | 2.96 | 11.1 | 0.23 | 0.73 | 3.0 | 15.1 | 12.6 | highly uneven |

From the above results, the olefin polymer particles obtained by the olefin polymerization catalyst containing the magnesium compound particles produced under the conditions satisfying the requirement of [1] of [Solution to Problem] described above were particles having a shape with highly uneven surface.

Example 11 described below and subsequent Examples, together with Examples 1 to 4, are Examples corresponding to [6] of [Solution to Problem] described above, and are examples in which olefin polymer particles having a smooth surface are produced mainly by using an olefin polymerization catalyst containing magnesium compound particles satisfying a specific Al/Mg ratio in order to describe the shape control of the olefin polymer particles by controlling the Al/Mg ratio of the magnesium compound particles.

[Example 11]

Preparation of Component (A1)

A homogeneous solution (the component (A11)) was obtained by mixing 95.2 g (1.0 mol) of anhydrous magnesium chloride, 332 ml of decane, 260.5 g (2.0 mol) of 2-ethyl-1-hexanol, and 298.6 g (1.0 mol) of 2-octyl-1-dodecanol, followed by reaction at 140°C for 3 hours.

Preparation of Magnesium Compound Particle (X-11)

Into a sufficiently nitrogen-substituted flask having an internal volume of 1000 ml, 50 ml of the component (A) (50 mmol in terms of magnesium atom) and 400 ml of purified decane were charged, and then 56 mmol of triethylaluminum (Al/Mg = 1.12 m.r.), which had been diluted with purified decane, was charged dropwise over 1 hour using CLEARMIX

CLM-0.8S manufactured by Organo under stirring at a rotation speed of 20000 rpm while maintaining the liquid temperature at 0°C. Thereafter, the liquid temperature was raised to 80°C over 5 hours, and the mixture was reacted for 1 hour. Next, while maintaining the liquid temperature at 80°C, 92.5 mmol of triethylaluminum (total Al/Mg = 2.97 m.r.), which had been diluted with purified decane, was again charged dropwise over 1 hour. Then, the mixture was further heated and reacted for 1 hour. After completion of the reaction, the solid portion was collected by filtration, sufficiently washed with decane, and 100 ml of decane was added thereto to obtain decane slurry of magnesium compound particles (X-1). The resulting magnesium compound particle (X-1) has an average particle size of 0.74 μm.

The other results are shown in Table 2.

Synthesis of Solid Catalyst Component Using Magnesium Compound Particle (X-11)

Into a nitrogen-substituted 200-mL glass reactor, 68 mL of decane was loaded, and 22 ml of decane slurry (4.9 mmol in terms of Mg atom) of the magnesium compound particles (X-1) prepared above was charged under stirring. Next, 10 mL of decane slurry (0.0027 mmol/mL in terms of Zr atom) of a transition metal compound represented by the following formula was added dropwise, and the mixture was reacted at 35°C for 4 hours. Thereafter, the reactant was filtered, washed twice with 50 ml of decane, and filtered. Then, 100 mL of decane was added to prepare decane slurry of solid catalyst component (1). A portion of the resulting slurry of the solid catalyst component (11) was collected to determine the concentration. The Zr concentration was 0.00027 mmol/mL (where 100 mol% of the supplied transition metal compound was supported).

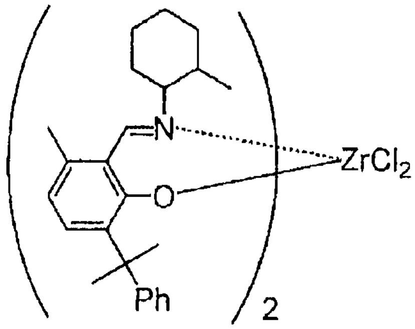

Polymerization of Ethylene

Into a sufficiently nitrogen-substituted stainless steel autoclave having an internal volume of 1000 ml, 500 ml of decane was charged and ethylene was circulated at 100 L/hr for 15 minutes at room temperature to saturate the liquid phase and the vapor phase. Subsequently, the temperature was raised to 65°C. Then, while ethylene was circulated at 0.4 L/hr, 1.25 ml of a decane solution of triisobutylaluminum (1.0 mmol/ml in terms of Al atom) and 3.3 ml of the slurry of the solid catalyst component (11) (0.16 mmol in terms of Mg atom and 0.00090 mmol in terms of Zr atom) were added, and the mixture was stirred for 5 minutes while maintaining the temperature, followed by the addition of 90 mg of Emulgen.

Thereafter, the autoclave was set to a closed system, and 10 mL of hydrogen was added. After the temperature was raised to 70°C, ethylene was supplied at a rate of 1.0 L/hr. Once the pressure reached 0.35 MPaG, ethylene was supplied so as to maintain 0.35 MPaG. When the amount of ethylene supplied after rising the temperature to 70°C reached 56 L, the supply of ethylene was stopped, the autoclave was cooled, and the ethylene was depressurized (ethylene supply time: 135 minutes). The resulting polymer slurry was filtered, washed with hexane, and dried under reduced pressure at 80°C for 10 hours to give 61 g of polymer. The obtained polymer had a smooth surface and a nearly spherical shape.

[Examples 12 to 17]

Magnesium compound particles were produced in the same manner as in Example 11 except that the conditions listed in Table 2 were applied, and a polymer was obtained using the magnesium compound particles. Table 2 shows the results. In Examples 12 to 17, the obtained polymer also had a smooth surface and a nearly spherical shape. The results are summarized in Table 2.

Table 2

| | During Production | | | Magnesium Compound Particle | | | Polymer | | | |
|---|---|---|---|---|---|---|---|---|---|---|
| | Al/Mg@ 0°C /m.r. | Al/Mg@ 80°C /m.r. | Al/Mg (whole) /m.r. | Mg/Al /m.r. | Alkoxy group/Mg /m.r. | Average particle size /μm | Mileage/ (kg/mmol-Mg) | [η] /dL/g | Average particle size /μm | Shape |
| Example 11 | 1.12 | 1.85 | 2.97 | 11.8 | 0.21 | 0.74 | 2.8 | 16.8 | 12.5 | slightly uneven |
| Example 12 | 1.09 | 1.91 | 3.00 | 13.2 | 0.20 | 0.71 | 2.9 | 14.7 | 12.1 | slightly uneven |
| Example 13 | 1.12 | 1.87 | 2.99 | 11.8 | 0.20 | 0.70 | 3.0 | 13.5 | 12.1 | slightly uneven |
| Example 14 | 1.03 | 1.97 | 3.00 | 11.8 | 0.22 | 0.71 | 2.9 | 15.5 | 12.2 | slightly uneven |
| Example 15 | 1.06 | 1.93 | 2.99 | 13.2 | 0.20 | 0.72 | 2.9 | 15.0 | 12.3 | slightly uneven |
| Example 16 | 1.09 | 1.95 | 3.04 | 14.1 | 0.20 | 0.71 | 2.9 | 14.9 | 12.2 | slightly uneven |
| Example 17 | 1.12 | 1.91 | 3.03 | 14.1 | 0.19 | 0.71 | 2.9 | 15.6 | 12.3 | slightly uneven |

From the results shown in Tables 1 and 2, it can be understood that olefin polymer particles having a desired particle shape can be produced by controlling the Al/Mg molar ratio to a specific value.

(Shape of Olefin Polymer Particle: Experimental Example Corresponding to [7] in [Solution to Problem])

[Examples 21 to 22]

The olefin polymer particles of Examples 1 and 3 were measured regarding the pore volume with a pore size in the range of 0.1 to 1 μm using the mercury porosimeter. The percentage of particles with protrusions visually observed was also determined from an electron micrograph of the particles. The results are summarized in Table 3.

[Comparative Examples 21 and 22]

The olefin polymer particles of Examples 13 and 16 were measured regarding the pore volume with a pore size in the range of 0.1 to 1 μm using the mercury porosimeter. The percentage of particles with protrusions visually observed was also determined from an electron micrograph of the particles. The results are summarized in Table 3.

**Table 3**

| | Average particle size/μm | [η]/(dl/g) | Pore volume/ ($mm^3$/g) | Percentage of particle with protrusion/% |
|---|---|---|---|---|
| Example 21 | 14.7 | 15.7 | 45 | ≥ 50 |
| Example 22 | 12.7 | 14.5 | 32 | ≥ 50 |
| Comparative Example 21 | 12.1 | 13.5 | 21 | ≤ 20 |
| Comparative Example 22 | 12.2 | 14.9 | 13 | ≤ 20 |

## Claims

1. A method for producing a magnesium compound particle satisfying the following requirements (i) and (ii), the method comprising a contact step of bringing

(A) a magnesium-containing compound solution comprising

(A-1) a magnesium-containing compound and
(A-2) a compound comprising an element selected from elements in Group 15 and Group 16 of the periodic table, and

(B) an organometallic compound comprising a metal element (MB), excluding magnesium, selected from elements in Group 1, Group 2, and Group 13 of the periodic table into contact with each other in a temperature range of -20 to 10°C.
(i) A particle size is 0.05 to 0.90 μm.
(ii) A ratio ([Mg]/[MB]) of a molar content [Mg] of magnesium atoms to a molar content [MB] of atoms of the metal element (MB) is 1.0 or more and 11.5 or less.

**2.** The production method according to claim 1, wherein a ratio ([MBr]/[Mgr]) of a molar amount [MBr] of atoms of the metal element (MB) used in the contact step to a molar amount [Mgr] of magnesium atoms contained in the magnesium-containing compound solution (A) is 2.5 to 2.96.

**3.** The production method according to claim 1, wherein the time for bringing the magnesium-containing compound solution (A) and the organometallic compound (B) into contact with each other in the contact step is 0.6 to 10 hours.

**4.** The production method according to claim 1, wherein the ratio [Mg]/[MB] is 5.0 to 11.3.

**5.** The production method according to claim 1, wherein the magnesium-containing compound solution (A) further comprises (A-3) a liquid hydrocarbon compound.

**6.** A method for controlling the shape of an olefin polymer particle, the method comprising:

a contact step of bringing

(A) a magnesium-containing compound solution comprising

(A-1) a magnesium-containing compound and
(A-2) a compound comprising an element selected from elements in Group 15 and Group 16 of the periodic table, and

(B) an organometallic compound comprising a metal element (MB), excluding magnesium, selected from elements in Group 1, Group 2, and Group 13 of the periodic table into contact with each other in a temperature range of -20 to 10°C; and

a step of polymerizing an olefin in the presence of an olefin polymerization catalyst comprising a magnesium compound particle having a particle size of 0.05 to 0.90 μm produced through the contact step and a transition metal compound component to produce an olefin polymer particle,
the method comprising controlling a ratio ([Mg]/[MB]) of a molar content [Mg] of magnesium atoms to a molar content [MB] of atoms of the metal element (MB) in the magnesium compound particle within a range of 1.0 or more and 20 or less.

**7.** An olefin polymer particle having:

an average particle size of 3 to 25 μm,
an intrinsic viscosity [η] at 135°C in decalin of 5 to 50 dl/g; and
a pore volume in a pore size range of 0.1 to 1 μm, as determined with a mercury porosimeter, of 25 to 100 $mm^3/g$.

[Fig. 1]

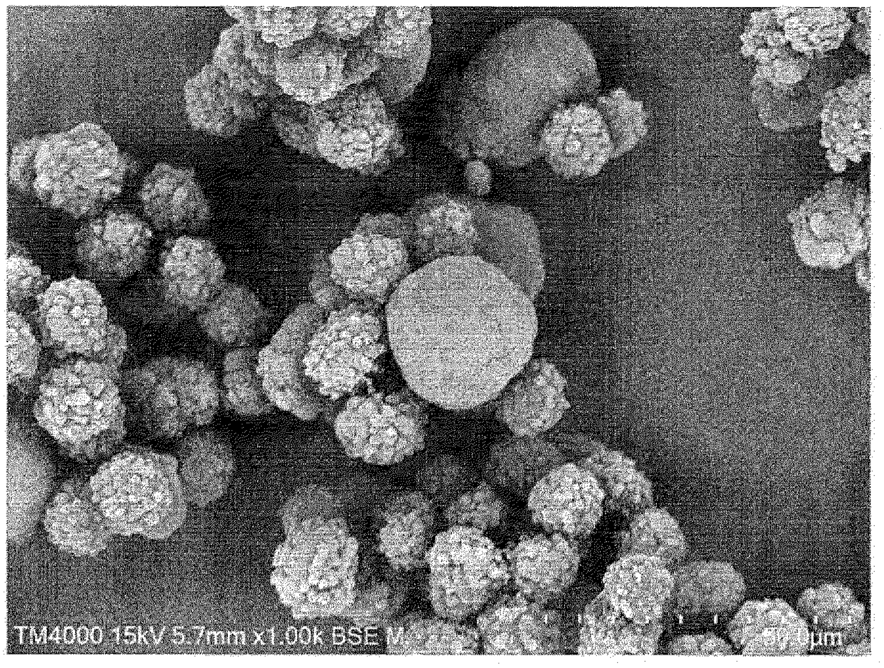


[Fig. 2]

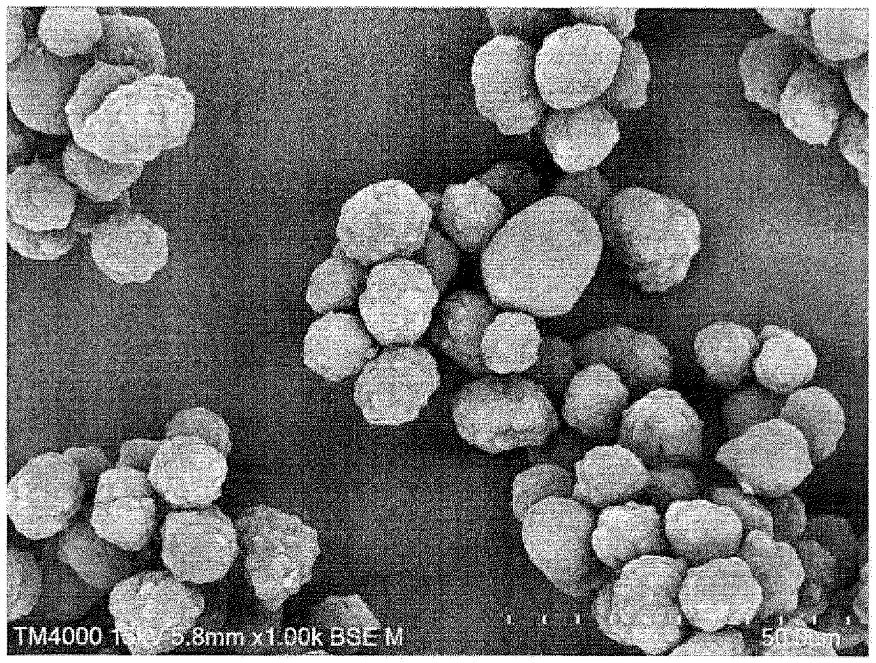

[Fig. 3]

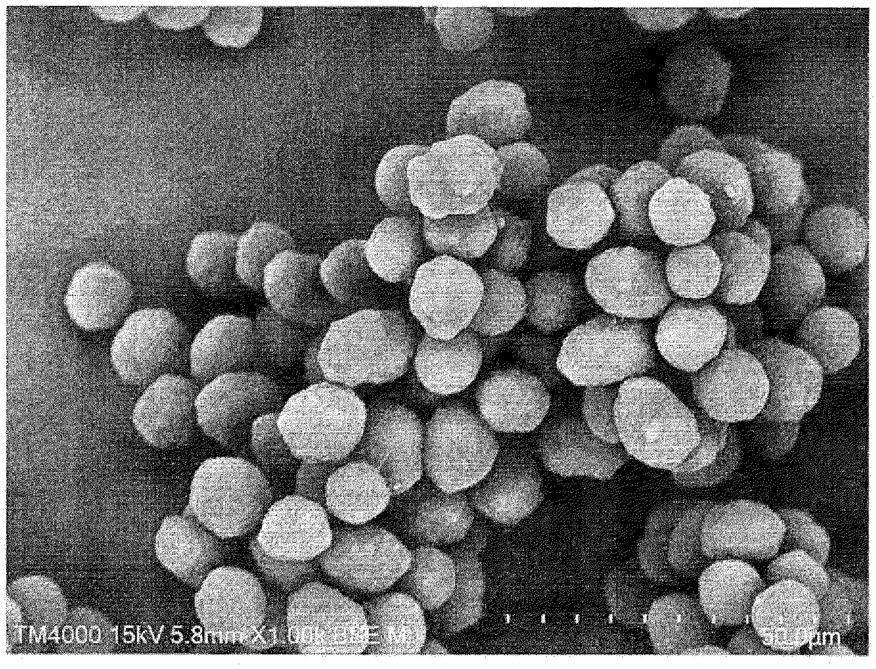
TM4000 15kV 5.8mm X1.00k BSE M
50.0μm

[Fig. 4]

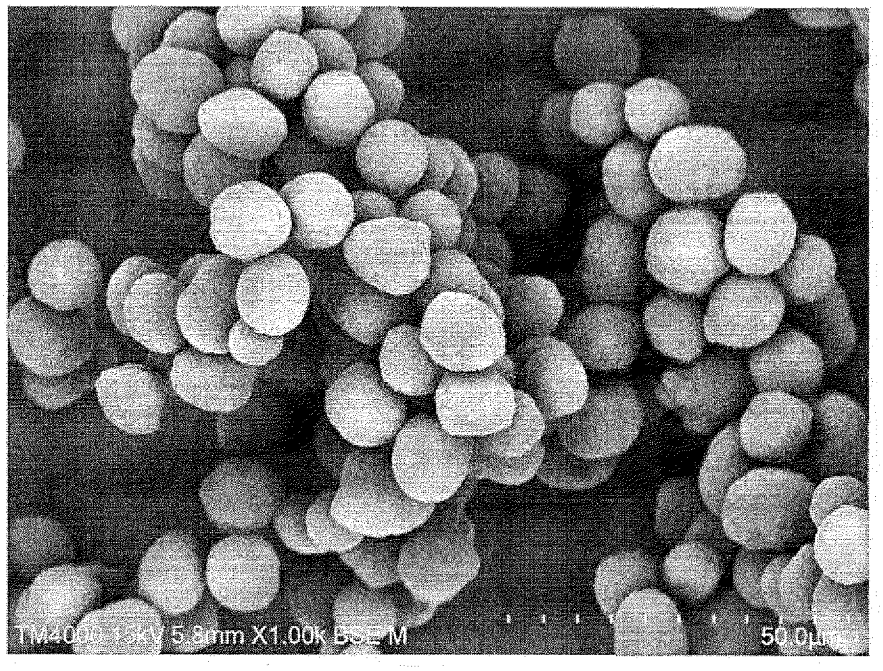
TM4000 15kV 5.8mm X1.00k BSE M
50.0μm

## INTERNATIONAL SEARCH REPORT

International application No.
**PCT/JP2024/004489**

**A. CLASSIFICATION OF SUBJECT MATTER**

***C01F 7/78***(2022.01)i; ***C08F 4/654***(2006.01)i
FI: C01F7/78; C08F4/654

According to International Patent Classification (IPC) or to both national classification and IPC

**B. FIELDS SEARCHED**

Minimum documentation searched (classification system followed by classification symbols)

C01F7/00-7/788; C08F4/00-4/82; B01J21/00-38/74; C01F5/00-5/42

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2006/054696 A1 (MITSUI CHEMICALS, INC.) 26 May 2006 (2006-05-26) paragraphs [0040], [0050]-[0051], [0144], [0154]-[0158], [0173]-[0174] | 1-7 |
| A | JP 59-133209 A (CHISSO CORPORATION) 31 July 1984 (1984-07-31) | 1-7 |
| A | JP 2008-144149 A (ASAHI KASEI CHEMICALS CORPORATION) 26 June 2008 (2008-06-26) | 1-7 |

☐ Further documents are listed in the continuation of Box C.

☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/004489**

| Patent document cited in search report | Publication date (day/month/year) | Patent family member(s) | Publication date (day/month/year) |
|---|---|---|---|
| WO 2006/054696 A1 | 26 May 2006 | US 2008/0044655 A1<br>paragraphs [0059], [0075]-[0076], [0214], [0221]-[0224], [0238]-[0239]<br>EP 1829900 A1<br>KR 10-2007-0067721 A<br>CN 101061144 A | |
| JP 59-133209 A | 31 July 1984 | US 4499194 A | |
| JP 2008-144149 A | 26 June 2008 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4828432 B
- JP 5221848 B
- JP 2006206768 A
- JP 2006206769 A
- JP H11315109 B
- JP 2000239312 A
- EP 1008595 A
- WO 0155213 A
- JP 2001002731 A
- EP 1043341 B
- WO 9827124 A


### Non-patent literature cited in the description


- *Chemical Review*, 2003, vol. 103, 283
- *Bulletin of the Chemical Society of Japan*, 2003, vol. 76, 1493
- *Angewandte Chemie*, 1995, vol. 34
- *Chemical Review*, 1998, vol. 8 (2587), 2587